# EUROPÄISCHE PATENTANMELDUNG

(11) **EP 1 204 194 A1**
(43) Veröffentlichungstag der Anmeldung: **08.05.2002**
(21) Anmeldenummer: 01125985.0
(22) Anmeldetag: 31.10.2001
(51) Int. Cl.: H02K 11/04

(54) **Axial aufsteckbares Elektronikgehäuse**

(30) Priorität: 03.11.2000 DE 10065796
(71) Anmelder: WILO GmbH, D-44263 Dortmund (DE)
(72) Erfinder: Krasmann, Holger, Dr., 44287 Dortmund (DE)
(74) Vertreter: COHAUSZ HANNIG DAWIDOWICZ & PARTNER

(57) **Zusammenfassung**

Von einem in seiner Drehzahl regelbaren Elektromotor angetriebene Pumpe, insbesondere Kreiselpumpe, mit einem eine Statorwicklung aufnehmenden Motorgehäuse und mit einem eine Laufradkammer ausbildendem Pumpengehäuse, das stirnseitig an das Motorgehäuse anschließt, wobei die zur elektronischen Regelung benötigten Komponenten in einem Elektronikgehäuse untergebracht sind, wobei das Elektronikgehäuse 5 auf die dem Pumpengehäuse 1 abgewandte Stirnwand des Motorgehäuses 4 in axialer Richtung lösbar aufgesteckt ist und wobei ein Aufstecken einerseits mit einer mechanischen Halterung und andererseits mit einer elektrischen Kontaktierung des Elektronikgehäuses 5 an dem Motorgehäuse 4 einhergeht.

## Beschreibung

Die vorliegende Erfindung betrifft eine von einem in seiner Drehzahl regelbaren Elektromotor angetriebene Pumpe, insbesondere Kreiselpumpe, mit einem eine Statorwicklung aufnehmenden Motorgehäuse und mit einem eine Laufradkammer ausbildenden Pumpengehäuse, das stirnseitig an das Motorgehäuse anschließt, wobei die zur elektronischen Regelung benötigten Komponenten in einem Elektronikgehäuse untergebracht sind.

Derartige Pumpen sind in vielen Ausführungsformen bekannt. Bei den bekannten Pumpen ist das Elektronikgehäuse oft als Kasten radial auf die Wandung des meist zylindrischen Motorgehäuses aufgesetzt. Diese Anordnung ist seit langer Zeit von den Klemmenkästen bekannt, in denen keine Regelelektronik sondern lediglich Anschlußklemmen zum Anschluß der Netzversorgung angeordnet sind. Die Montage derartiger Elektronikgehäusen ist für den Hersteller, der die sonstigen Komponenten der Pumpe in axialer Richtung montiert, aufwendig und teuer. Außerdem ist der Zugang zum Elektronikgehäuse einer in einem Leitungssystem befindlichen Pumpe für den Servicetechniker umständlich, besonders wenn die Pumpe in einem engen Bauraum eingebaut ist.

Es sind darüber hinaus Klemmenkästen bekannt, die auf der rückwärtigen Seite des Motorgehäuses angebracht sind. Dabei handelt es sich um einzelne Klemmen, die auf der Rückwand des Motorgehäuses angeordnet und mit einem Deckel abgedeckt sind. Diese rückwärtigen Klemmenkästen ermöglichen zwar einen komfortablen Zugang zu den Klemmen, sie sind jedoch wegen ihrer geringen Abmessungen und wegen der begrenzten Möglichkeiten die darin befindlichen elektronischen Bauteile zu kühlen ungeeignet, weitere Komponenten der Regelelektronik aufzunehmen. Vereinzelt wurden auch axial anbringbare Elektronikgehäuse bekannt. Diese sind jedoch entweder nur im Zuge der Pumpenfertigung einmalig aufsteckbar und können nicht beispielsweise zur Wartung demontiert werden. Falls eine Demontage möglich ist, so gestaltet sich diese derart kompliziert, daß sie nur von besonders geschultem Fachpersonal unter hohem Zeitaufwand bewerkstelligt werden. Dabei müssen zunächst die elektrischen und dann die mechanischen Verbindungen getrennt gelöst und später in anderer Reihenfolge wieder montiert werden.

Aufgabe der vorliegenden Erfindung ist es nunmehr, eine Pumpe zu schaffen, deren Elektronikgehäuse für die Aufnahme einer komplexen Regelelektronik geeignet ist und das sich in seiner einfachen Konzeption leicht und zuverlässig mit wenigen Handgriffen am Motorgehäuse der Pumpe montieren und gleichzeitig kontaktieren läßt.

Diese Aufgabe wird durch die Pumpe mit den kennzeichnenden Merkmalen des Anspruch 1 gelöst.

Der besondere Gedanke der Erfindung liegt darin, das Elektronikgehäuse als separates Bauteil in axialer Richtung am Motorgehäuse der Pumpe zu montieren. Die Montage erfolgt durch einfaches Aufstecken, wodurch einerseits eine mechanische Halterung in Eingriff kommt und andererseits eine elektrische Kontaktierung zwischen Elektronikgehäuse und Motorgehäuse erfolgt. Die Demontage geschieht entsprechend einfach und kann vom Mitarbeiter im Kundendienst schnell und problemlos ohne großen Werkzeugaufwand bewerkstelligt werden. Bei dem erfindungsgemäßen Elektronikmodul mit den entsprechend einfachen Montagemöglichkeiten handelt es sich somit um eine Einheit, die durch den Kunden, also den Installateur, im Servicefall oder bei schlechter Zugänglichkeit am Montageort montiert werden kann. Die Erfindung schafft somit im Gegensatz zur bislang bekannten "Produktionsschnittstelle" eine "Kundenschnittstelle", die durch entsprechende sicherheitstechnische Absicherung die Montage- und Wartungsfreundlichkeit deutlich verbessert. Die Erfindung, das Elektronikgehäuse derart auf die dem Pumpengehäuse abgewandte Stirnwand des Motorgehäuses in axialer Richtung lösbar aufzustecken, bietet mehrere Vorteile:

So ist es zunächst vorteilhaft, daß die Pumpe auf engem Bauraum eingebaut werden kann und das Elektronikgehäuse jederzeit über die Rückseite der Pumpe zugänglich ist. Für Wartungszwecke kann es dann auch jederzeit abgenommen werden. Das erfindungsgemäße Elektronikgehäuse unterstützt damit den Gedanken eines modularen Aufbaus einer Pumpe. Ein weiterer wesentlicher Vorteil ist, daß die Dimensionen des Elektronikgehäuses unabhängig von den Abmessungen der Pumpe sind. Gerade bei modernen Pumpen werden die Komponenten Pumpen- und Motorgehäuse immer kleiner, während die für die Regelung der Pumpe benötigte Elektronik einen vergleichsweise großen Bauraum benötigt. Mit der Erfindung läßt sich das Elektronikgehäuse an die Anforderungen der Elektronik anpassen, ohne daß es zu Problemen bedingt durch die geringen Abmessungen des Motorgehäuses kommt. So wird das Elektronikgehäuse zu einem baulich dominierenden Teil der Pumpe. Dieses Konzept birgt unbegrenzte Möglichkeiten bezüglich des Einsatzes von Elektronik bei Pumpen. Zudem läßt sich das Konzept kostengünstig umsetzen und trägt wegen Erhöhung der Wartungsfreundlichkeit zu einer hohen Zuverlässigkeit bei. Das Elektronikgehäuse bietet damit die Möglichkeit, auf seiner Rückseite Bedien- und/oder Anzeigenelemente anzubringen, die bequem zugänglich und ablesbar sind.

Besonders vorteilhaft ist es, wenn zwischen Motorgehäuse und Elektronikgehäuse Steckkontakte angeordnet sind, die in axialer Richtung steckbar sind und über die die Statorwicklung kontaktiert ist. Beim axialen Aufstecken greifen die "male" oder "female" Kontakte jeweils mit ihrem Gegenstück ineinander und kontaktieren damit die Statorwicklung. Somit läßt sich das Elektronikgehäuse für eine Wartung der Elektronik oder der Pumpe einfach abnehmen und wieder aufsetzen. Alle Komponenten sind leicht und komfortabel zugänglich. Dabei ist es vorteilhaft, im Elektronikgehäuse Klemmen zum Anschluß von Netzleitungen vorzusehen, wobei die Netzversorgung über die elektrischen Kontaktierung zwischen dem Elektronikgehäuse und dem Motorgehäuse auf die Statorwicklung schaltbar ist.

Der mechanische Halt des Elektronikgehäuses kann durch wenige Schrauben, die in die rückwärtige Stirnseite gedreht werden, unterstützt werden. Eine Vereinfachung der Montage wird dadurch erreicht, daß die zur Kontaktierung nötigen Steckkontakte in Mehrfachsteckern zusammengefaßt sind. Es ist auch vorteilhaft, einen zentralen Steckkontakt auszubilden, der koaxial zur Welle angeordnet ist. Dieser kann die zur Kontaktierung einer Masseleitung verwendet werden. Damit nicht auf jeden Fall das ganze Elektronikgehäuse abgenommen werden muß, ist es von Vorteil, es auf der dem Pumpengehäuse abgewandten Rückseite mit einem abnehmbaren Deckel zu verschließen. Damit braucht bloß der Deckel geöffnet zu werden, um einen Zugriff auf die elektronischen Komponenten zu ermöglichen.

Von besonderem Vorteil ist es, wenn die Steckkontakte derart ausgebildet sind, daß das Elektronikgehäuse in mindestens zwei um 90° gegeneinander verdrehten Positionen aufsteckbar ist. Gerade bei Pumpen, die unmittelbar am hydraulischen System mit den entweder horizontal oder vertikal verlaufenden Rohren angebracht werden, lassen sich mit vier festen Positionen alle notwendigen Orientierungen realisieren. Verbindungselemente können dabei eine Einführhilfe darstellen und eine Zentrierung bewirken. Es können jedoch auch separate Führungen, beispielsweise in Form von massiven Stiften vorgesehen werden, die selber keine Bedeutung für den Halt der Verbindung haben. Die Vorteile der Erfindung liegen darin, daß das Elektronikmodul in jedem Falle so orientiert werden kann, daß eine optimale Wärmeabfuhr der Elektronik möglich ist. Außerdem lassen sich die auf dem Elektronikgehäuse angebrachten Hinweise und Displays jederzeit bequem ablesen und die Bedienelemente gut handhaben. Die Erfindung trägt zu einer Einsparung von Bauteilen und damit von Kosten bei, was die Akzeptanz der Aggregate im Markt erhöht. Außerdem wird die Zuverlässigkeit und Betriebssicherheit der Motoren, insbesondere der Pumpen, erhöht. Auch ein Ablassen des vorhandenen Heizwassers aus dem System ist nicht erforderlich.

Da das Elektronikgehäuse einige Leistungshalbleiter aufnimmt, ist eine ausreichende Kühlung besonders wichtig. So ist es vorteilhaft, wenn das Elektronikgehäuse Kühlrippen aufweist, die auf der dem Pumpengehäuse zugewandten Vorderseite angebracht sind und die das Motorgehäuse zumindest teilweise umgeben. Derart angebrachte Kühlrippen beeinflussen die vorteilhafte Funktionsfähigkeit des Elektronikgehäuse nicht und bieten die Möglichkeit einer effektiven Kühlung.

In einer weiteren vorteilhaften Ausführungsform beinhaltet das Elektronikgehäuse einen Klemmenkasten, der von einem separaten abnehmbaren Deckel verschlossen ist. Der Klemmenkasten ist somit ein Abteil des Elektronikgehäuses. In diesem integrierten Klemmenkasten sind Anschlußlemmen untergebracht, über die eine Netzversorgung anschließbar ist. Um die Funktionalität des Elektronikgehäuses nicht zu beeinträchtigen, ist es vorteilhaft, die benötigten Kabeldurchführungen an einer Seitenwandung vorzusehen.

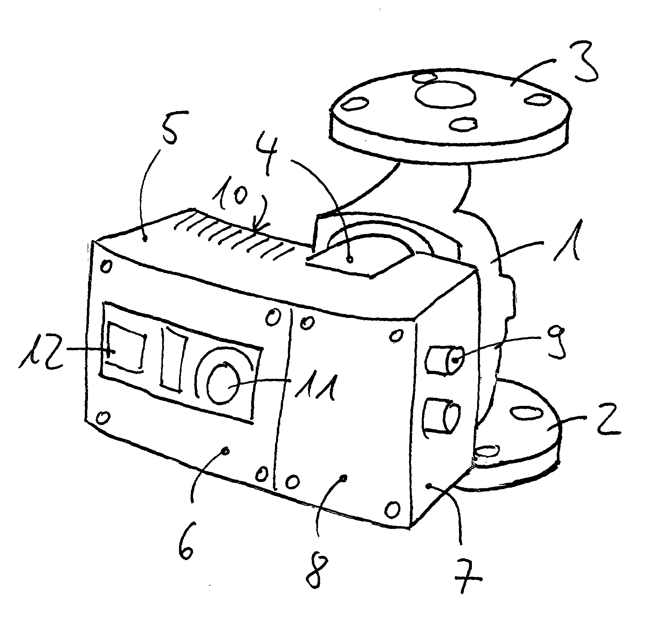

Eine besondere Ausführungsform der Erfindung wird im folgenden anhand der Figur näher beschrieben.

In der Figur ist eine von einem in seiner Drehzahl regelbaren Elektromotor angetriebene Kreiselpumpe gezeigt, die ein Pumpengehäuse 1 mit koaxial "inline" angeordneten Saug- 2 und Druckstutzen 3 hat. An das eine Laufradkammer umgebende Pumpengehäuse 1 schließt stirnseitig ein zylindrisches Motorgehäuse 4 an, das eine Statorwicklung aufnimmt. In diesem Ausführungsbeispiel handelt es sich um eine Spalttopfpumpe, bei der ein Spalttopf den hydraulischen Teil, in dem der Rotor läuft, vom elektrischen Teil, der die Statorwicklung aufweist, trennt.

Die zur elektronischen Regelung benötigten Komponenten sind in einem Elektronikgehäuse 5 untergebracht, das auf die dem Pumpengehäuse 1 abgewandte Stirnwand des Motorgehäuses 4 in axialer Richtung lösbar aufgesteckt ist. Beim Aufstecken erfolgt eine mechanische Halterung und eine elektrische Kontaktierung. Deutlich erkennbar ist, daß das Elektronikgehäuse 6 das Motorgehäuse 4 in seinen Abmessungen radial zur Laufradachse überragt.

Zwischen dem Motorgehäuse 4 und dem Elektronikgehäuse 5 sind nicht dargestellte Steckkontakte angeordnet, die in axialer Richtung steckbar sind und über die die Statorwicklung kontaktiert ist. Das Elektronikgehäuse 5 ist auf der dem Pumpengehäuse 1 abgewandten Rückseite von einem abnehmbaren Deckel 6 verschlossen. Zudem ist ein Teil des Elektronikgehäuses 5 abgetrennt und bildet einen Klemmenkasten 7, der seinerseits von einem separaten abnehmbaren Deckel 8 verschlossen ist. Der Klemmenkasten 7 weist Anschlußlemmen auf, über die eine Netzversorgung anschließbar ist. Dabei wird die Zuleitung der Netzversorgung den Klemmen über Durchlässe 9 in der seitlichen Wandung des Elektronikgehäuses 5 zugeführt.

Das Elektronikgehäuse weist außerdem Kühlrippen 10 auf, die auf der dem Pumpengehäuse 1 zugewandten Vorderseite angebracht sind und die das Motorgehäuse 4 teilweise einfassen. Auf der Rückseite des Elektronikgehäuses 6 ist ein Bedienknopf zur Einstellung 11 der Pumpenleistung und eine digitale Anzeige 12 angebracht.

## Patentansprüche

1. Von einem in seiner Drehzahl regelbaren Elektromotor angetriebene Pumpe, insbesondere Kreiselpumpe, mit einem eine Statorwicklung aufnehmenden Motorgehäuse und mit einem eine Laufradkammer ausbildendem Pumpengehäuse, das stirnseitig an das Motorgehäuse anschließt, wobei die zur elektronischen Regelung benötigten Komponenten in einem Elektronikgehäuse untergebracht sind,
**dadurch gekennzeichnet, daß** das Elektronikgehäuse (5) auf die dem Pumpengehäuse (1) abgewandte Stirnwand des Motorgehäuses (4) in axialer Richtung lösbar aufgesteckt ist, wobei ein Aufstecken einerseits mit einer mechanischen Halterung und andererseits mit einer elektrischen Kontaktierung des Elektronikgehäuses (5) an dem Motorgehäuse (4) einhergeht.

2. Pumpe nach Anspruch 1,
**dadurch gekennzeichnet, daß** im Elektronikgehäuse (5) Anschlußklemmen zum Anschluß von Netzleitungen vorgesehen sind, wobei die Netzversorgung über die elektrischen Kontaktierung zwischen dem Elektronikgehäuse (5) und dem Motorgehäuse (4) auf die Statorwicklung schaltbar ist.

3. Pumpe nach Anspruch 1 oder 2,
**dadurch gekennzeichnet, daß** am Motorgehäuse (4) und am Elektronikgehäuse (5) Steckkontakte angeordnet sind, die beim axialen Aufstecken jeweils mit ihrem Gegenstück ineinandergreifen und damit die Statorwicklung kontaktieren.

4. Pumpe nach einem der vorherigen Ansprüche,
**dadurch gekennzeichnet, daß** das Elektronikgehäuse (5) in zwei um 90° gegeneinander verdrehten Positionen aufsteckbar ist.

5. Pumpe nach einem der vorherigen Ansprüche,
**dadurch gekennzeichnet, daß** das Elektronikgehäuse (5) Kühlrippen (10) aufweist, die auf der dem Pumpengehäuse (1) zugewandten Vorderseite angebracht sind und die das Motorgehäuse (4) zumindest teilweise umgeben.

6. Pumpe nach einem der vorherigen Ansprüche,
**dadurch gekennzeichnet, daß** das Elektronikgehäuse (5) auf der dem Pumpengehäuse (1) abgewandten Rückseite von einem abnehmbaren Deckel (6) verschlossen ist.

7. Pumpe nach einem der vorherigen Ansprüche,
**dadurch gekennzeichnet,** daßaufderRückseitedes Elektronikgehäuses (5) Bedien- (11) und/oder Anzeigenelemente (12) angebracht sind.

8. Pumpe nach einem der vorherigen Ansprüche,
**gekennzeichnet durch** einen Saug- (2) und einen Druckstutzen (3), die koaxial ("inline") an das Pumpengehäuse (1) angeformt sind.

9. Pumpe nach einem der vorherigen Ansprüche,
**dadurch gekennzeichnet, daß** die zur Kontaktierung nötigen Steckkontakte in Mehrfachsteckern zusammengefaßt sind.

10. Elektromotor nach einem der vorherigen Ansprüche,
**dadurch gekennzeichnet, daß** ein zentraler Steckkontakt ausgebildet ist, der koaxial zur Welle angeordnet ist.

11. Elektromotor nach einem der vorherigen Ansprüche,
**dadurch gekennzeichnet, daß** das Elektronikgehäuse (5) einen Klemmenkasten (7) umfaßt, der von einem separaten abnehmbaren Deckel (8) verschlossen ist.

12. Elektromotor nach einem der vorherigen Ansprüche,
**dadarch gekennzeichnet,** daß das Elektronikgehäuse (5) mit seinen Abmessungen das Motorgehäuse überragt.
